# EUROPÄISCHE PATENTANMELDUNG

(11) **EP 4 815 273 A1**
(43) Veröffentlichungstag der Anmeldung: **30.09.2026**
(21) Anmeldenummer: 25166585.7
(22) Anmeldetag: 27.03.2025
(51) Int. Cl.: H02K 15/0273, B32B 7/12, B32B 15/01, H01F 41/02, H02K 15/121

(54) **VERFAHREN ZUM HERSTELLEN EINES BLECHPAKETS FÜR EINE ELEKTRISCHE MASCHINE, SOWIE BLECHPAKET**

(71) Anmelder: ThyssenKrupp Steel Europe AG, 47166 Duisburg (DE)
(72) Erfinder: NEHER, Johan, 45134 Essen (DE); LEWE, Tobias, 48147 Münster (DE); KRANZ, Stefan, 47167 Duisburg (DE); HERGET, Florian, 58453 Witten (DE)
(74) Vertreter: Zenz Patentanwälte Partnerschaft mbB

(57) **Zusammenfassung**

Die Erfindung betrifft ein Verfahren zum Herstellen eines Blechpakets für eine elektrische Maschine. Das Verfahren umfasst die folgenden Schritte:
A) Bereitstellen einer Anzahl von Blechlamellen, wobei die Blechlamellen mit einer zumindest teilweise aushärtbaren Klebstoffbeschichtung auf Polymerbasis versehen sind, wobei die Klebstoffbeschichtung eine Aktivierungstemperatur aufweist,
B) Stapeln der Blechlamellen zu einem Blechlamellenstapel,
C) Wärmebehandlung des Blechlamellenstapels zum Herbeiführen einer Klebeneignung der Klebstoffbeschichtung.

Die Wärmebehandlung umfasst ein Erwärmen des Blechlamellenstapels hin zu einer Prozesstemperatur umfasst, die geringer ist als die Aktivierungstemperatur.

Die Erfindung betrifft außerdem ein Blechpaket.

## Beschreibung

Die vorliegende Erfindung betrifft ein Verfahren zum Herstellen eines Blechpakets für eine elektrische Maschine. Ferner betrifft sie ein Blechpaket.

Die Funktionsweise von elektrischen Maschinen, beispielsweise von Elektromotoren, ist seit langem bekannt. Nicht zuletzt vor dem Hintergrund der zunehmenden Verwendung von Elektromotoren im individualisierten Personenkraftverkehr, oft auch unter dem Schlagwort der Elektromobilität angesprochen, gewinnt der Elektromotor weiter an Bedeutung. Wesentliche Bestandteile jedes Elektromotors sind ein Stator und ein Rotor, wobei der Begriff des Stators einen feststehenden Teil des Motors bezeichnet und der Begriff des Rotors einen sich bewegenden Teil des Motors bezeichnet.

Eine Herausforderung bei Bereitstellung von Elektromotoren ist, die Effizienz des Elektromotors, beispielsweise die bereitgestellte Leistung pro Volumen und/oder den Wirkungsgrad, im Rahmen eines wirtschaftlich sinnvollen Aufwands zu erhöhen.

Ein Konzept zur Bereitstellung von effizienten Elektromotoren ist die Herstellung von Statoren und/oder Rotoren oder von Teilen der Statoren und/oder Rotoren als sogenanntes Statorpaket beziehungsweise Rotorpaket. Hierbei werden die genannten Bauteile als Blechpakete, auch als Lamellenpakete bezeichnet, aus einzelnen sogenannten Lamellen zusammengesetzt. Der Begriff der Lamelle bezeichnet ein Formteil, welches aus einem Elektroblech oder einem Elektroband ausgenommen wurde. Eine gängige Methode hierfür ist das Ausstanzen der Lamelle. Die Lamellenpakete werden sodann aus einer Vielzahl von dünnen Lamellen zusammengesetzt, indem die Lamellen miteinander gestapelt und gegeneinander, bereichsweise oder bevorzugt vollständig, voneinander elektrisch isoliert werden.

Die Herstellung einer derartigen Komponente, insbesondere eines derartigen Blechpakets, umfasst stets die Schritte der Herstellung oder Bereitstellung von Lamellen sowie der Verbindung der Lamellen miteinander. Die Verbindung wird dabei bevorzugt in einer Weise vorgenommen, dass die Lamellen nach dem Verbinden abschnittsweise, bevorzugt vollständig, elektrisch voneinander isoliert sind, das heißt bevorzugt: dass zwei benachbarte Lamellen keine galvanische Verbindung zueinander haben.

Eine vorteilhafte Möglichkeit, den nachteiligen Einfluss mechanischer Einwirkung auf die Lamellen zu verringern und gleichzeitig eine gute Isolation der Lamellen zueinander zu erreichen, ist der Einsatz von Klebstoffen als Verbindungsmittel. Diese Klebstoffsysteme weisen auch isolierende Eigenschaften analog zu Elektroisolierlacken auf.

Lösungen für die Herstellung von Blechpaketen, die beispielsweise als Stator oder als Rotor in einem Elektromotor genutzt werden können, sind beispielsweise der EP 3 895 279 A1 sowie der EP 3 895 292 A1 zu entnehmen. In beiden Schriften ist beschrieben, aktivierbare Klebstoffe für das Verkleben der einzelnen Lamellen zu verwenden. Dabei ist sowohl ein Aktivieren der Klebstoffe mit nachfolgendem Stapeln als auch ein Stapeln der Lamellen mit nachfolgendem Aktivieren möglich.

Untersuchungen haben gezeigt, dass - entgegen der bisherigen auf Beobachtungen beruhenden Annahmen, weiterhin die Herausforderung besteht, Blechpakete bereitzustellen, die mit noch besserem Maß an Reproduzierbarkeit die gewünschten magnetischen Eigenschaften aufweisen.

Die Aufgabe wird gelöst mit einem Verfahren mit den Merkmalen des Anspruchs 1. Die Aufgabe wird ferner gelöst mit einem Blechpaket mit den Merkmalen des Anspruchs 15.

Es soll demnach ein Blechpaket hergestellt werden. Das Blechpaket ist insbesondere ein Stator-Paket, das als Stator einer elektrischen Maschine dienen kann oder das gemeinsam mit einem oder mehreren weiteren Stator-Paketen zu einem Stator einer elektrischen Maschine zusammengesetzt werden kann, oder ein Rotor-Paket, das als Rotor einer elektrischen Maschine dienen kann oder das gemeinsam mit einem oder mehreren weiteren Rotor-Paketen zu einem Rotor einer elektrischen Maschine zusammengesetzt werden kann. Das erfindungsgemäße Verfahren zum Herstellen eines Blechpakets für eine elektrische Maschine weist die folgenden Schritte auf:
A) Bereitstellen einer Anzahl von Blechlamellen, wobei die Blechlamellen mit einer zumindest teilweise aushärtbaren Klebstoffbeschichtung auf Polymerbasis versehen sind. Im beispielhaften Fall der Herstellung eines Stator-Pakets weist die Blechlamelle eine hierfür geeignete Form auf, es handelt sich dann um eine Stator-Lamelle. Im alternativen beispielhaften Fall der Herstellung eines Rotor-Pakets weist die Blechlamelle eine hierfür geeignete Form auf, es handelt sich dann um eine Rotor-Lamelle. Der zumindest teilweise aushärtbare Klebstoff der Klebstoffbeschichtung ist insbesondere ein thermisch aktivierbarer Klebstoff. Wie der Fachperson bekannt ist, weist ein solcher aktivierbarer Klebstoff eine Aktivierungstemperatur auf, bei welcher der Klebstoff aktiviert wird.

Aktivierung bezeichnet das Einbringen von Energie, um Bestandteile im Klebstoff, wie beispielsweise Polymerdispersion, Härter, Aktivator oder ähnliche Moleküle, von einem inerten in einen reaktionsfähigen Zustand zu bringen. Die Aktivierung ist beendet bei Eintritt der Reaktion zur Bildung des Endproduktes. Letztere Reaktion tritt ein durch Vernetzung der Edukte.

Inert heißt im Sinne der vorliegenden Erfindung, dass sich die physikalischen und chemischen Eigenschaften für den gesamten Stoff nicht ändern, unabhängig ob auf molekularer Ebene einzelne wenige Reaktionen stattfinden.

Die Aktivierungstemperatur bezeichnet die Temperatur, bei der ein Großteil der Edukte, bevorzugt mindestens 60 Gew.-%, 65 Gew.-%, 70 Gew.-%, besonders bevorzugt mindestens 75 Gew.-%, 80 Gew.-%, 85 Gew.-%, 90 Gew.-%, insbesondere mindestens 95 Gew.-% in einen reaktionsfähigen Zustand gebracht werden (Aktivierung).

B) Stapeln der Blechlamellen zu einem Blechlamellenstapel;

C) Wärmebehandlung des Blechlamellenstapels zum Herbeiführen einer Klebeneignung der Klebstoffbeschichtung zum Verkleben der Blechlamellen des Blechlamellenstapels.

Durch das Herbeiführen der Klebeneigung der jeweiligen Klebstoffbeschichtungen verkleben die aufeinander gestapelten Lamellen, und sie werden dadurch als Blechlamellenstapel gefügt.

Nach dem Fügen liegt der Blechlamellenstapel als fertiggestelltes Blechpaket vor, beispielsweise zum Einsatz als Stator oder Rotor oder als Teil eines Stators oder Rotors. Beispielsweise kann vorgesehen sein, dass das fertiggestellte Blechpaket als Stator-Paket vorliegt, und dass eine Anzahl von beispielsweise zwei oder drei oder vier oder fünf oder sechs oder sieben oder acht gestapelten, gefügten oder nicht gefügten, bevorzugt gleichartigen und/oder eine gleiche Umfangsform aufweisenden, Stator-Blechpaketen gemeinsam zur Bildung eines Stators einer elektrischen Maschine verwendet werden. Alternativ kann beispielsweise vorgesehen sein, dass das fertiggestellte Blechpaket als Rotor-Paket vorliegt, und dass eine Anzahl von beispielsweise zwei oder drei oder vier oder fünf oder sechs oder sieben oder acht oder wenigstens acht oder wenigstens 20 oder wenigstens 30, insbesondere zwischen zwei und 50, bevorzugt zwischen zwei und 30, besonders bevorzugt zwischen zwei und 20 gestapelten, gefügten oder nicht gefügten, beispielsweise gleichartigen und/oder eine gleiche Umfangsform aufweisenden, Rotor-Blechpaketen gemeinsam zur Bildung eines Rotors einer elektrischen Maschine genutzt werden.

Bevorzugt weist jede Lamelle eine Dicke von 0,05 mm bis 2,5 mm auf, bevorzugt von 0,12 mm bis 1,00 mm, besonders bevorzugt von 0,15 mm bis 0,37 mm, insbesondere bevorzugt von 0,18 mm bis 0,30 mm. Die Werte sind zuzüglich Klebstoffbeschichtung aufzufassen, das heißt: die genannten Werte beziehen sich auf die Lamellendicke ohne die Klebstoffbeschichtung, die also zusätzlich zu der genannten Dicke Bestandteil der dann beschichteten Lamelle ist. In einer vorteilhaften Weiterbildung weisen alle zu dem Blechlamellenstapel gestapelten Lamellen dieselbe Dicke auf, oder weisen zumindest die meisten wie beispielsweise 90 Prozent der Anzahl der zu dem Blechlamellenstapel gestapelten Lamellen eine selbe Dicke auf. Bevorzugt besteht der durch Stapeln erzeugte Blechlamellenstapel aus einer Anzahl von 15 bis 2500 Lamellen, die bei Durchführung des Verfahrens miteinander verklebt werden, besonders bevorzugt aus einer Anzahl von 20 bis 2000 Lamellen, die bei Durchführung des Verfahrens miteinander verklebt werden.

Die Klebstoffbeschichtung kann auf den in Schritt A) bereitgestellten Lamellen als punktuelle Klebstoffflecken aufgebracht sein. Alternativ kann der Klebstoff als geschlossene Klebstoffbeschichtung auf der Lamelle angeordnet sein, die eine Lamellenseite teilweise abdeckt, oder als vollflächige Klebstoffbeschichtung vollständig abdeckt.

Es kann vorgesehen sein, dass die Klebstoffbeschichtung auf den Lamellen einseitig oder beidseitig aufgebracht ist. Wenn beidseitig eine Klebstoffbeschichtung aufgebracht wird, kann die Dicke der Beschichtung auf beiden Seiten gleich sein, aber auch unterschiedliche Dicken auf den beiden Seiten der Lamelle können vorgesehen sein, sodass auf einzelnen Lamellen des Lamellenstapels, bevorzugt auf jeder Lamelle des Lamellenstapels, vor dem Stapeln eine asymmetrische Klebstoffdickenverteilung aufgebracht ist. Bevorzugt weist ein Großteil der Lamellen, wie beispielsweise 90 Prozent der Anzahl der Lamellen, oder weisen besonders bevorzugt alle Lamellen des Blechlamellenstapels eine selbe Klebstoffbeschichtung auf, also dieselbe Dicke einer einseitigen Beschichtung oder dieselben Dicken einer symmetrischen oder asymmetrischen zweiseitigen Beschichtung sowie jeweils dieselbe Klebstoffzusammensetzung.

Als bevorzugte Dicke der Klebstoffbeschichtung, das bedeutet bei einseitiger Klebstoffbeschichtung die Dicke der Beschichtung auf der einen beschichteten Seite, beziehungsweise bei zweiseitiger Klebstoffbeschichtung die Gesamtdicke der Klebstoffbeschichtung auf beiden Seiten addiert, liegt eine Dicke von 1 Mikrometer bis 20 Mikrometern vor, bevorzugt von 2 bis 10 Mikrometern, besonders bevorzugt von 4 Mikrometern bis 8 Mikrometern.

Das Stapeln der Lamellen erfolgt bevorzugt derart, dass für alle im Blechlamellenstapel unmittelbar benachbarten Lamellen gilt, dass die im Zwischenraum zwischen jeweils benachbarten Lamellen vorhandene Dicke der Klebstoffbeschichtung immer gleich ist. Beispielsweise wird bei einseitig beschichteten Lamellen für jede Lamelle des Stapels die beschichtete Seite der Lamelle auf die nicht beschichtete Seite der jeweils nächsten Lamelle geschichtet und umgekehrt. Beispielsweise wird bei asymmetrisch beschichteten Lamellen eine dickere von zwei Beschichtungen einer Lamelle auf eine dünnere von zwei Beschichtungen der benachbarten Lamelle gestapelt und umgekehrt.

Nach Schritt B) folgt im Rahmen des erfindungsgemäßen Verfahrens als Schritt C) eine Wärmebehandlung des Blechlamellenstapels aus den mit Klebstoff beschichteten Blechlamellen.

Erfindungsgemäß umfasst die Wärmebehandlung der Lamellen ein Erwärmen des Blechlamellenstapels hin zu einer Prozesstemperatur, die einen Wert von 80 Grad Celsius oder mehr und von 250 Grad Celsius oder weniger beträgt. Erfindungsgemäß ist vorgesehen, dass die Prozesstemperatur geringer ist als die Aktivierungstemperatur der Klebstoffbeschichtung. Beispielsweise kann die Prozesstemperatur einen Temperaturabstand von 10 Grad Celsius bis 30 Grad Celsius unterhalb der Aktivierungstemperatur angesiedelt sein. Beispielsweise kann die Prozesstemperatur einen Temperaturabstand von 45 Grad Celsius bis 75 Grad Celsius unterhalb der Aktivierungstemperatur angesiedelt sein. Das Erwärmen erfolgt dabei ausgehend von Raumtemperatur, die beispielsweise 20 Grad Celsius beträgt.

Entgegen bisherigen Annahmen und entgegen den Erwartungen der an der Entwicklung beteiligten Personen hat sich gezeigt, dass bei einer Herstellung von Blechlamellenstapeln mittels Verklebens die magnetischen Eigenschaften des erhaltenen Blechlamellenstapels in empfindlicher Weise von der Durchführung der Wärmebehandlung abhängen. Besonders gute magnetische Eigenschaften haben sich bei Prozesstemperaturen unterhalb der Aktivierungstemperatur gezeigt, wobei jene Prozesstemperatur einen Wert im Bereich von 80 Grad Celsius bis 250 Grad Celsius aufweist, bevorzugt von 100 bis 150 Grad Celsius, besonders bevorzugt von 110 bis 140 Grad Celsius oder bis 130 Grad Celsius oder bis 125 Grad Celsius oder bis 120 Grad Celsius.

Insbesondere hat sich gezeigt, dass bei einer erfindungsgemäßen Paketherstellung trotz des Wärmebehandelns unterhalb der Aktivierungstemperatur sich die Klebeneigung der Klebstoffbeschichtung als für die Bildung eines verklebten Blechpakets genügend hoch erwies. Die Paketstabilität der gebildeten Blechpakete erwies sich dabei für einen gesicherten Transport der Bauteile, sowie für eine Weiterverarbeitung, insbesondere für einen Motorenaufbau, als ausreichend.

Überraschenderweise hat sich vor allem gezeigt, dass auch unterhalb der Aktivierungstemperatur eine Klebeneigung der Blechlamellen erzeugt wurde, die ausreichend wirksam war, um ein akzeptables Maß der Verklebung herbeizuführen.

Besonders bevorzugt ist die Prozesstemperatur maximal 240 Grad oder weniger, oder maximal 230 Grad oder weniger, oder maximal 220 Grad oder weniger, oder maximal 210 Grad oder weniger, oder maximal 200 Grad oder weniger, oder maximal 190 Grad oder weniger, oder maximal 180 Grad oder weniger, oder maximal 170 Grad oder weniger, oder maximal 160 Grad oder weniger, oder maximal 150 Grad oder weniger, oder maximal 140 Grad oder weniger, oder maximal 130 Grad oder weniger, oder maximal 120 Grad oder weniger; dabei in der Reihenfolge mit aufsteigender Präferenz.

Besonders bevorzugt ist die Prozesstemperatur 100 Grad oder mehr.

Besonders bevorzugt beträgt die Prozesstemperatur einen Wert von 100 Grad Celsius bis 140 Grad Celsius, noch bevorzugter von 110 Grad Celsius bis 130 Grad Celsius oder von 100 Grad Celsius bis 130 Grad Celsius.

Gemäß einer vorteilhaften Weiterbildung des erfindungsgemäßen Verfahrens erfolgt das Erwärmen des Blechlamellenstapels, ausgehend von Raumtemperatur von beispielsweise 20 Grad Celsius, hin zu der Prozesstemperatur während eines Zeitraums, der maximal 500 Sekunden beträgt, bevorzugt maximal 300 Sekunden, besonders bevorzugt maximal 250 s beträgt. Bevorzugt ist, dass der Zeitraum des Erwärmens wenigstens 10 Sekunden, besonders bevorzugt wenigstens 50 Sekunden beträgt. Der Zeitraum des Erwärmens, in dem ausgehend von der Raumtemperatur die Temperatur des Blechlamellenstapels, bevorzugt mit konstanter Heizrate, hin zu der Prozesstemperatur erhöht wird, liegt gemäß dieser Weiterbildung in einem vergleichsweise kurzen Zeitfenster, sodass eine vergleichsweise schnelle Aufwärmung des Blechlamellenstapels erreicht wird. Es hat sich gezeigt, dass die Zeitdauer, die für das Erwärmen in Anspruch genommen wurde, innerhalb der genannten Werte vorteilhafte Eigenschaften des hergestellten Blechpakets, beispielsweise hinsichtlich seiner magnetischen Eigenschaften, zur Folge hat.

Gemäß einer bevorzugten Weiterbildung ist vorgesehen, dass die Wärmebehandlung ein Halten des Blechlamellenstapels bei der Prozesstemperatur oder im Wesentlichen, das heißt: beispielsweise bis zu 1 Prozent des Temperaturwerts auf der Kelvin-Skala abweichend, bei der Prozesstemperatur umfasst.

Gemäß einer alternativen bevorzugten Weiterbildung ist vorgesehen, dass die Wärmebehandlung ein Halten des Blechlamellenstapels in einem Prozesstemperaturbereich oder im Wesentlichen, das heißt: beispielsweise bis zu 1 Prozent des Kelvinwerts abweichend, in dem Prozesstemperaturbereich umfasst, wobei der Prozesstemperaturbereich ein Bereich von plus/minus 10 Grad Celsius, bevorzugt plus/minus 5 Grad Celsius, oberhalb beziehungsweise unterhalb der Prozesstemperatur ist. Diese Maßgabe ist der Beobachtung geschuldet, dass geringfügige Schwankungen um die Prozesstemperatur oder den Prozesstemperaturbereich nicht zu einer Verschlechterung der magnetischen Eigenschaften führen.

Das Halten der Prozesstemperatur oder des Prozesstemperaturbereichs wird in einer vorteilhaften Weiterbildung für wenigstens 1 Sekunde durchgeführt, bevorzugt wenigstens 30 Sekunden, besonders bevorzugt wenigstens 45 Sekunden, insbesondere bevorzugt wenigstens 60 Sekunden. Ein bevorzugter Maximalwert des Haltens liegt bei 40 Minuten, bevorzugt maximal 20 Minuten, besonders bevorzugt maximal 10 Minuten, insbesondere bevorzugt maximal 5 Minuten. Besonders bevorzugt ist eine Haltezeit von 45 Sekunden bis 240 Sekunden, bevorzugt von 60 Sekunden bis 180 Sekunden, insbesondere bevorzugt von 70 Sekunden bis 150 Sekunden, in der in besonders vorteilhafter Weise eine gute erzielte magnetische Eigenschaftskombination einhergeht mit einem nicht übermäßig zeitaufwendigen Fertigungsverfahren.

Bevorzugt erfolgt am Ende des Haltezeitraums ein Abkühlen der Lamellenstapel auf Raumtemperatur, beispielsweise durch Entnahme aus dem Ofen bei Wärmebehandlung im Ofen oder durch Beendigung der induktiven Energiezufuhr bei Wärmebehandlung mit Induktionsheizer oder im Induktionsofen am Ende des Haltezeitraums.

Um eine gute und dauerhafte wechselseitige Haftung aller Lamellen sicherzustellen, wird in einer vorteilhaften Weiterbildung des erfindungsgemäßen Verfahrens zumindest zeitweise beim Erwärmen des Schritts C), bevorzugt durchgängig während der gesamten Dauer der Wärmebehandlung des Schritts C), eine in axialer Richtung weisende Druckkraft auf die Stirnseiten des Blechlamellenstapels beaufschlagt. Das Beaufschlagen der übereinander positionierten Lamellen mit einer in axialer Richtung weisenden Druckkraft bezeichnet das Beaufschlagen mit einer Druckkraft, die in eine senkrecht zur Lamellenoberfläche gerichtete Richtung zur Komprimierung der einzelnen Lamellen gegeneinander auf eine Stirnseite des Pakets der gefügten Lamellen ausgeübt wird, bevorzugt mit gleichmäßiger Flächenpressung. Die Druckkraft, genauer gesagt der Druck, also Kraft pro Fläche, beträgt bevorzugt 0,25 N/mm² oder mehr und/oder maximal 10 N/mm², bevorzugt von 1 N/mm² oder mehr und 8 N/mm² oder weniger, besonders bevorzugt von 1 N/mm² oder mehr und 5 N/mm² oder weniger, noch bevorzugter von 2 N/mm² oder mehr und 4 N/mm² oder weniger. Bevorzugt wird die Beaufschlagung mit der axialen Druckkraft während des gesamten Zeitraums der Wärmebehandlung des Schritts C) aufrechterhalten.

Das Erwärmen und bevorzugt die gesamte Wärmebehandlung des Schritts C) kann beispielsweise in einem Glühofen durchgeführt werden. Um eine gleichmäßige und gut reproduzierbare Wärmebehandlung des Blechlamellenstapels zu begünstigen, wird die Wärmebehandlung noch bevorzugter unter Nutzung eines Induktionsheizers und/oder eines Induktionsofens durchgeführt.

Gemäß einer vorteilhaften Weiterbildung kann vorgesehen sein, dass nach der Wärmebehandlung des Schritts C) ein, als ein separater und nicht mehr zur Wärmebehandlung des Schritts C) ausgeführter, weiterer Schritt eines Nachwärmens für einen Zeitraum zwischen, jeweils inklusive, 60 s und 3 Stunden bei einer Temperatur im Bereich 160 Grad Celsius bis 200 Grad Celsius durchgeführt wird. Bevorzugt wird das Nachwärmen bei einer Temperatur gleich oder oberhalb der Aktivierungstemperatur insbesondere von mindestens 170 Grad Celsius, besonders bevorzugt 180 Grad Celsius und maximal 195 Grad Celsius durchgeführt. In einer besonderen Ausführungsform ist der Temperaturabstand ΔT zwischen Erwärmungstemperatur/Aktivierungstemperatur und Nachwärmtemperatur mindestens 10 Grad Celsius, bevorzugt mindestens 30 Grad Celsius, besonders bevorzugt mindestens 40 Grad Celsius, noch mehr bevorzugt mindestens 50 Grad Celsius und insbesondere bevorzugt mindestens 60 Grad Celsius. Es hat sich gezeigt, dass bei dem Temperaturabstand insbesondere eine gute Kombination aus magnetischen und mechanischen Eigenschaften vorlag. Das Nachwärmen wird entweder unmittelbar nach der Wärmebehandlung an dem noch warmen Blechlamellenstapel oder nach dem Abkühlen des Blechlamellenstapels unter erneutem Erwärmen des Blechlamellenstapels durchgeführt und dient dem vollständigen Aushärten der Klebstoffbeschichtung. Das Nachwärmen erfolgt bevorzugt in einem Ofen oder induktiv, dabei bevorzugt ohne axiale Druckbeaufschlagung. Die einem Nachwärmen unterzogenen Blechlamellenstapel zeigten in vorteilhafter Weise eine Eignung für eine Weiterbehandlung des Blechlamellenstapels mit hinsichtlich möglicher Krafteinwirkungen anspruchsvollen Bearbeitungsschritten und bei potenziell erhöhten Temperaturen, wie beispielsweise für ein Fügen des Blechlamellenstapels mit einer Welle oder ein Fügen des Blechlamellenpakets in ein Motorgehäuse.

Die Klebstoffbeschichtung besteht bevorzugt aus einem Klebstoff, der enthält:
- 60 Gewichtsteile mindestens eines Epoxidharzes bezogen auf seine Festharzform,
- 0,5 bis 15 Gewichtsteile eines latenten Härters,
- 1 bis 15 Gewichtsteile eines latenten Beschleunigers.

Bevorzugt weist die Klebstoffbeschichtung 1 bis 10 Gewichtsteile des latenten Härters auf, besonders bevorzugt 2 bis 5 Gewichtsteile des latenten Härters.

Der Begriff des latenten Härters bezeichnet einen Stoff, welcher zur Härtung des Epoxidharzes dient, für das Härten jedoch aktiviert werden muss, insbesondere durch Zufuhr von chemischer und/oder thermischer Energie. Der latente Härter wird dem Klebstoff beispielsweise als in Pulverform vorliegender Feststoff zugegeben.

Der Begriff des latenten Beschleunigers bezeichnet einen Stoff, welcher die Härtung des Epoxidharzes durch den latenten Härter beschleunigt. Das Attribut "latent" bezieht sich auch im Zusammenhang mit dem Beschleuniger darauf, dass auch der Beschleuniger zur Erfüllung seiner Funktion zuvor durch chemische und/oder thermische Energie aktiviert werden muss. Der latente Beschleuniger wird dem Klebstoff beispielsweise als in Pulverform vorliegender Feststoff zugegeben.

Die oben angegebene Zusammensetzung bezieht sich auf die Mischung von den als Festkörper vorliegenden Komponenten in den angegebenen Gewichtsteilen zu einer Klebstoffmischung, welche in Dispersion und/oder Lösung mit einer geeigneten Flüssigkeit zu dem Klebstoff wird, der eine Klebstoffbeschichtung bilden kann. In verwendbarem Zustand, also in der zur Beschichtung geeigneten Form, liegt der Klebstoff mit den angegebenen Komponenten bevorzugt als Dispersion der oben angegebenen Zusammensetzung in einem Dispersionsmedium, insbesondere als wässrige Dispersion, vor.

Dadurch, dass ein Blech mit einer Klebstoffbeschichtung aus einem thermisch aktivierbaren Klebstoff bereitgestellt wird, dient das mit dem Klebstoff beschichtete Blech als Vorprodukt für auf flexible Weise anpassbare Herstellverfahren von elektromagnetischen Komponenten, insbesondere Statorpaketen oder Rotorpaketen. Dadurch, dass der Klebstoff zunächst thermisch aktiviert werden muss, kann die Klebefunktion nach dem Ausnehmen von Lamellen aus dem Blech, beispielsweise durch Stanzen, zu einem gewünschten Zeitpunkt beziehungsweise zu einem gewünschten Verfahrensschritt vorgenommen werden. Innerhalb eines kurzen Zeitraums nach dem Aktivieren müssen die Lamellen nach dem Aktivieren (optional bevorzugt auch unter teil- oder vollflächigem Druck in der Presse und/oder in einem nachgeschalteten Verdichtungsprozess) zusammengeführt werden, damit diese während der chemischen Aushärtereaktion miteinander verklebt werden. Nur so können fehlerfreie, nicht delaminierte und geometrisch genaue, mechanisch stabile Pakete erzeugt werden.

Mit der genannten Klebstoffzusammensetzung weist das Blech eine Oberfläche mit einer kurzen Aktivierungszeit von beispielsweise 0,5 bis 1 Sekunde und eine kurze Aushärtungszeit von nur wenigen Sekunden auf. Diese Eigenschaften gehen mit einer vergleichsweise hohen Temperaturbeständigkeit und einer vergleichsweise hohen Isolations- und Alterungsfähigkeit einher.

Das in dem genannten Klebstoff vorhandene Epoxidharz umfasst eine oder mehrere Epoxidharzkomponenten mit mehr als einer Epoxidgruppe, von denen vorzugsweise mindestens ein Epoxidharz ein Erweichungspunkt größer 50° Celsius besitzt.

Bei den Epoxidharzen kann es sich sowohl um aliphatische, cycloaliphatische oder aromatische Epoxidharze handeln. Aliphatische Epoxidharze beinhalten Komponenten, die sowohl eine aliphatische Gruppe als auch mindestens zwei Epoxidharzgruppen tragen.

Beispiele für aliphatische Epoxidharze können sein Butandioldiglycidylether, Hexandioldiglycidylether, Dimethylpentandioxid, Butadiendioxid, Diethylenglycoldiglycidylether.

Cycloaliphatische Epoxidharze sind bspw. 3-Cyclohexenylmethyl-3-cyclohexylcarboxylatdiepoxid, 3,4-Epoxycyclohexylalkyl-3',4'-epoxycyclohexancarboxylat, 3,4-Epoxy-6-methylcyclohexylmethyl-3',4'-epoxy-o-methylcyclohexancarboxylat, Vinylcyclohexandioxid, Bis(3,4-Epoxycyclohexylmethyl)adipat, Dicyclopentadiendioxid, 1,2-Epoxy-6-(2,3-epoxypropoxy)hexahydro-4,7-methanoindan.

Aromatische Epoxidharze sind bspw. Bisphenol-A-Epoxidharze, Bisphenol-F-Epoxidharze, Phenol-Novolac-Epoxidharze, Cresol-Novolac-Epoxidharze, Biphenylepoxidharze, Biphenolepoxidharze, 4,4'-Biphenyl-Epoxidharze, Divinylbenzoldioxid, 2-Glycidylphenylglycidylether, Tetraglycidylmethylendianilin.

In einer bevorzugten Ausgestaltung der vorliegenden Erfindung ist das Epoxidharz Bisphenol A-Epoxidharz.

Als latenter Härter wird eine Substanz oder ein Gemisch von Substanzen verwendet, die vorzugsweise bei Temperaturen im Bereich von 80° Celsius bis 200° Celsius Härtungsreaktionen mit den Epoxidharzen des Klebstoffs eingehen.

Der Härter kann Dicyandiamide, Aziridinderivate, Triazinderivate, Imidazoline, Imidazole, o-Tolylbiguanid, cyclische Amidine, organische Hexafluoroantimonat- oder Hexafluorophosphat-Verbindungen oder BF3-Aminkomplexe enthalten. Die Verbindungen können einzeln oder in Kombination eingesetzt werden.

Beispiele sind 2-Methylimidazol, 2-Undecylimidazol, 2-Heptadecylimidazol, 1,2-Dimethylimidazol, 2-Ethyl-4-methylimidazol, 2-Phenylimidazol, 2-Phenyl-4-metylimidazol, 1-Benzyl-2-metylimidazol, 1-Benzyl-2-phenylimidazol, 1-Cyanoethyl-2-metylimidazol, 1-Cyanoethyl-2-undecylimidazol, 1-Cyanoethyl-2-ethyl-4-metylimidazol, 1-Cyanoethyl-2-phenylimidazol, 1-Cyanoethyl-2-undecylimidazoliumtrimellitat, 1-Cyanoethyl-2-phenylimidazolium-trimellitat, 2,4-Diamino-6-[2'-methylimidazolyl-(1')]-ethyl-s-triazin, 2,4-Diamino-6-[2'-undecylimidazolyl-(1')]-ethyl-s-triazin, 2,4-Diamino-6-[2'-ethyl-4'-methylimidazolyl-(1')]-ethyl-s-2,4-diamino-6-[2"methylimidazolyl-(1')]-ethyl-s-triazin, 2-Phenylimidazol, 2-Phenyl-4,5-dihydroxymetylimidazol, 2-Phenyl-4-methyl-5-hydroxymethylimidazol, 2,3-Dihydro-1H-pyrrolo[1,2-a]benzimidazol, (1-Dodecyl-2-methyl-3-benzyl)imidazoliumchlorid, 2-Methylimidazolin, 2-Phenylimidazolin, 2,4-Diamino-6-vinyl-1,3,5-triazin, 2,4-Diamino-6-vinyl-1,3,5-triazin Isocyansäure-Addukt, 2,4-Diamino-6-methacryloyloxyethyl-1,3,5-triazin, 2,4-Diamino-6-methacryloyloxyethyl-1,3,5-triazin Isocyansäure-Addukt, 1,3,5-Triazin, 2,4-Diamino-6-methyl-1,3,5-triazin, 2,4-Diamino-6-nonyl-1,3,5-triazin, 2,4-Diamino-6-phenyl-1,3,5-triazin, 2,4-Dimethoxy-6-methyl-1,3,5-triazin, 2,4-Dimethoxy-6-phenyl-1,3,5-triazin, 2-Amino-4,6-dimethyl-1,3,5-triazin, 2-Amino-4-dimethylamino-6-methyl-1,3,5-triazin, 2-Amino-4-ethoxy-6-methyl-1,3,5-triazin, 2-Amino-4-ethyl-6-methoxy-1,3,5-triazin, 2-Amino-4-methoxy-6-methyl-1,3,5-triazin, 2-Amino-4-methyl-6-phenyl-1,3,5-triazin, 2-Chloro-4,6-dimethoxy-1,3,5-triazin, 2-Ethylamino-4-methoxy-6-methyl-1,3,5-triazin, 1-o-Tolylbiguanid.

In einer bevorzugten Ausgestaltung der vorliegenden Erfindung enthält der Beschleuniger ein Harnstoffderivat und/oder ein Imidazol.

Die genannte Klebstoffzusammensetzung kann darüber hinaus noch weitere Komponenten enthalten.

In einer bevorzugten Ausgestaltung der vorliegenden Erfindung enthält der Härter ein Dicyandiamid, ein Imidazol, einen BF3-Aminkomplex oder eine Kombination derselben.

Der Klebstoff kann in einer Ausgestaltung 1 bis 10 Gewichtsteile eines latenten Beschleunigers, bevorzugt 1 bis 5 Gewichtsteile eines latenten Beschleunigers, besonders bevorzugt 2 bis 5 Gewichtsteile eines latenten Beschleunigers, ganz besonders bevorzugt 2 bis 4 Gewichtsteile eines latenten Beschleunigers enthalten.

In einer anderen bevorzugten Ausführungsform ist vorgesehen, dass der Klebstoff weiterhin 0,2 bis 8 Gewichtsteile, bevorzugt 0,2 bis 4 Gewichtsteile, Absorptionsadditive aufweist. Die Absorptionsadditive, die gemäß dieser weiterführenden Idee vorgesehen sein kann, ist aus der Gruppe der Flammruße und/oder aus der Gruppe der wasserlöslichen Farbstoffe ausgewählt.

Der Begriff der Absorptionsadditive bezeichnet einen Stoff, der Wärmestrahlung absorbiert. Eine Wärmestrahlung absorbierender Stoff geht insbesondere mit dem Vorteil einher, dass die Nutzung eines Verfahrens effizienter ermöglicht wird, bei welchem die thermische Aktivierung des Klebstoffs mittels elektromagnetischer Strahlung, insbesondere mittels Bestrahlens mit Licht im IR-Wellenlängenbereich erfolgt, bevorzugt im NIR-Wellenlängenbereich.

Bevorzugt enthält der Klebstoff eines oder mehrere der einer Fachperson bekannten Isolationsadditive, wobei der Begriff der Isolationsadditive sich auf speziell zur Erhöhung des elektrischen Widerstands des Klebstoffs bereitgestellte Additive bezieht. Die Isolationsadditive können in Mengen von 1 bis 10 Gewichtsteilen, bevorzugt 1 bis 5 Gewichtsteilen, in dem Kleber enthalten sein.

Der im Klebstoff enthaltene latente Beschleuniger besteht vorzugsweise zu wenigstens 50 Gew.-%, noch bevorzugter wenigstens 90 Gew.-%, noch bevorzugter vollständig, aus Harnstoffderivat.

Besonders bevorzugt ist das Harnstoffderivat ein N,N-Dimethylharnstoff oder ein N,N'-Dimethylharnstoff oder ein bifunktionelles Harnstoffderivat, bevorzugt mit zwei Harnstoffgruppen als funktionelle Gruppen, im speziellen besonders bevorzugt ein 4,4'-Methylen-bis-(Phenyldimethylharnstoff), oder eine Mischung mehrerer der vorgenannten.

Der im Klebstoff enthaltene latente Beschleuniger besteht vorzugsweise zu wenigstens 50 Gew.-%, noch bevorzugter wenigstens 90 Gew.-%, noch bevorzugter zu wenigstens 98 Gew.-%, speziell bevorzugt vollständig, aus 4,4'-Methylen-bis-(Phenyldimethylharnstoff).

In einer Alternative wird ein Harnstoffderivat eingesetzt, bei welchem mindestens eines, bevorzugt zwei, besonders bevorzugt drei Wasserstoffatome durch, voneinander unabhängig, Alkylgruppen und oder Phenylgruppen, die ihrerseits substituiert sein können, ersetzt sind. Bevorzugt handelt es sich bei den Alkylgruppen um Methyl, Ethyl, Propyl oder Butyl, bevorzugt Methyl. In einer weiteren Alternative wird im Sinne der Erfindung ein bifunktionelles Harnstoffderivat als ein oben beschriebenes Derivat bezeichnet, welches zwei funktionelle Gruppen aufweist. Funktionelle Gruppen sind Atomgruppen, die die Stoffeigenschaften und insbesondere das Reaktionsverhalten der Verbindung maßgeblich bestimmen, insbesondere gehen die funktionellen Gruppen Reaktionen ein. Ferner ist das erfindungsgemäß einzusetzenden Harnstoffderivat halogenfrei. In einer Alternative weist das erfindungsgemäß einzusetzenden Harnstoffderivat zwei Harnstoffderivate als funktionelle Gruppen auf. Vorteilhaft können dadurch Epoxyharze ohne die Anwesenheit von Dicyanamiden als Vernetzer gehärtet werden.

In einer Alternative wird als Harnstoffderivat auch oder ausschließlich ein unsymmetrisch substituierter Harnstoff verwendet.

In einer weiteren Alternative wird eine Mischung aus zwei, drei oder mehreren der vorgenannten eingesetzt.

Als Harnstoffderivat kann auch ein Stoff 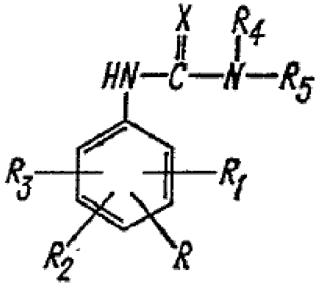 vorgesehen sein mit R: Wasserstoff oder eine Gruppe gemäß 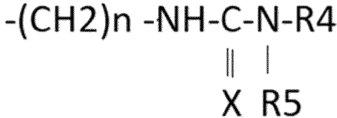 mit
n = 0 oder 1, bevorzugt 1,
X = O oder S, bevorzugt O,
R1, R2 und R3: jeweils Wasserstoff, ein Halogen, NitroGruppe, eine substituierte oder nichtsubstituierte Alkylgruppe, Alkoxylgruppe, Arylgruppe oder Aryloxylgruppe,
R4: Alkylgruppe, Alkenylgruppe, Cycloalkylgruppe, Cycloalkenylgruppe, Aralkylgruppe optional substituiert durch ein Halogen, Hydroxyl oder Cyan, bevorzugt Methyl, Ethyl, Propyl, Butyl, besonders bevorzugt Methyl,R5: wie R4 oder Alkoxylgruppe, R5 optional mit R4 einen heterocyklischen Ring bildend,
oder ein N,N-Dimethyl-N'-(3,4-Dichlorophenyl)Harnstoff oder ein N,N-Dimethyl-N'-(3-chioro-4-methyl-phenyl)Harnstoff oder ein N,N-Dimethyl-N'-(3-chloro-4-methoxyphenyl)Harnstoff oder ein N,N-Dimethyl-N'(3-chloro-4-ethylphenyl)Harnstoff oder ein N,N-Dimethyl-N'-(4-methyl-3-nitrophenyl)Harnstoff oder ein N-(N'-3,4-dichlorophenylcarbamoyl)morpholine oder ein N,N-dimethyl-N'(3-chloro-4-methylphenyl)thio-Harnstoff;
bevorzugt ist das Harnstoffderivat 4,4'-Methylen-bis-(Phenyldimethylharnstoff);
oder eine Mischung aus zwei, drei oder mehreren der vorgenannten. Eine solche Mischung enthält bevorzugt mindestens 10 Vol-%, 25 Vol-%, bevorzugt 50 Vol-%, 60 Vol-%, 70 Vol-%, 80 Vol-%, oder 90 Vol-% 4,4'-Methylen-bis-(Phenyldimethylharnstoff). Der Vorteil dieser Harnstoffderivate ergibt sich aus der GB 1293142 A; die Erfinder haben gefunden, dass derartige Derivate sich hervorragend für die Herstellung von elektromagnetischen Komponenten nutzen lassen.

Eine Klebstoffbeschichtung gemäß Anspruch 13 weist eine Aktivierungstemperatur auf, die einen Wert im Wertebereich von 160 Grad Celsius bis 180 Grad Celsius beträgt.

Das Harnstoffderivat kann auch eine Mischung aus mehreren der vorgenannten Harnstoffderivate sein.

Die mittlere Teilchengröße (arithmetisches Mittel) des Harnstoffderivats ist bevorzugt 1 Mikrometer oder mehr und 30 Mikrometer oder weniger.

Es kann vorgesehen sein, dass die Klebstoffbeschichtung auf den Blechlamellen einseitig oder beidseitig aufgebracht ist. Wenn beidseitig eine Klebstoffbeschichtung aufgebracht ist, kann die Dicke der Beschichtung gleich sein, aber auch unterschiedliche Dicken können vorgesehen sein.

Das Aufbringen des Klebstoffs kann beispielsweise auf das Blech erfolgen, aus dem sodann eine Blechlamelle zur Durchführung des erfindungsgemäßen Verfahrens und seiner Weiterbildungen erzeugt wird, beispielsweise mittels Stanzens. Das Aufbringen kann mittels bekannter Verfahren erfolgen, insbesondere mittels Coil Coating (Rolle zu Rolle).

Als bevorzugte Dicke der Klebstoffbeschichtung, das bedeutet bei einseitigem Klebstoff die Dicke der Beschichtung auf der einen Seite beziehungsweise bei zweiseitiger Klebstoffbeschichtung die Gesamtdicke der Klebstoffbeschichtung auf beiden Seiten addiert, beträgt, jeweils inklusive, zwischen 1 Mikrometern und 20 Mikrometern, bevorzugt zwischen 2 Mikrometern und 10 Mikrometern. Besonders bevorzugt ist eine Gesamtdicke zwischen 4 und 8 Mikrometern.

Eine einseitig vorgenommene Klebstoffbeschichtung des Blechs geht mit einer apparativ einfacheren Herstellung einher, eine beidseitige Klebstoffbeschichtung des Blechs geht wiederum mit dem Vorteil einher, dass bei einer Aufeinanderpositionierung von einzelnen aus dem Blech hergestellten Lamellen Klebstoffoberfläche an Klebstoffoberfläche positioniert wird, wodurch eine verbesserte Haftung und dadurch eine höhere mechanische Stabilität der elektromagnetischen Komponente erreicht wird, was in Versuchen gezeigt wurde und weiter unten dargestellt ist.

Besonders bevorzugt ist die erste Teilbeschichtung der ersten Blechoberfläche und die zweite Teilbeschichtung der zweiten Bleichoberfläche mit einer zweiten Dicke derart aneinander angepasst, dass die erste Dicke wenigstens das 1,5-fache, bevorzugt das 2-fache der zweiten Dicke beträgt. In einer derartigen Konfiguration ist die erste Dicke für eine hervorragende Isolation verantwortlich, so dass die Gefahr von Klebstofflücken nahezu verschwindend ist, während die dünnere der beiden, nämlich die mit der zweiten Dicke, aufgetragene zweite Teilbeschichtung im Wesentlichen der Herstellung der hervorragenden Haftung dient.

Ganz besonders bevorzugt ist eine beidseitige Beschichtung, die eine Gesamtdicke beider Beschichtungen mit einem Wert im Bereich von 4 Mikrometern bis 6 Mikrometern aufweist. Eine derart geringe Beschichtungsdicke ist mit den erfindungsgemäß oder gemäß Weiterbildungen der Erfindung verwendeten Klebstoffen aufgrund ihrer hohen Reaktivität möglich, wie die hergestellten Beispiele belegen. Bekannte Backlack-Klebstoffe erfordern in der Regel höhere Beschichtungsdicken als 6 Mikrometer (z.B. Backlack beidseitig, je 5 µm pro Seite). Dies führt zu dem Vorteil, dass aus den genannten Blechen oder seinen Weiterbildungen Komponenten, insbesondere Statoren oder Rotoren, hergestellt werden können, die einen signifikant höheren Eisenfüllfaktor aufweisen als es mittels Backlack-Verfahren hergestellte Komponenten tun. Vorteil ist eine etwas höhere Effizienz der die Komponente aufweisende elektrische Maschine.

In einer weiteren Alternative ist zwischen Blech und Klebstoffschicht eine Isolierlackschicht angeordnet und/oder auf der im Blechlamellenstapel der Klebstoffschicht gegenüberliegenden Seite nur Isolierlack angeordnet.

Bevorzugt werden Lamellen verwendet, die aus einem Blech erzeugt wurden, das als Platine aus einem Elektroband oder als Elektroband bereitstand, wobei das Blech besonders bevorzugt aus einem nicht kornorientierten Elektroband besteht.

Bevorzugter Werkstoff für die Blechlamellen ist ein Elektroblech, insbesondere nicht kornorientiertem Elektroblech,
bevorzugt neben Fe und unvermeidbaren Verunreinigungen umfassend (alle Angaben in Gew.-%):
0,1 bis 4,00 Si,
0,01 bis 2,00 Al,
0,01 bis 1,60 Mn,
optional 0,01 bis zu 0,25 P,
optional 0,01 bis 1,80 Cr;
besonders bevorzugt, neben Fe und unvermeidbaren Verunreinigungen bestehend aus (alle Angaben in Gew.-%):
2,3 bis 3,50 Si,
0,3 bis 1,60 Al,
0,07 bis 0,65 Mn,
optional 0,01 bis zu 0,07 P,
optional 0,01 bis 1,60 Cr;
jede Lamelle bevorzugt eine Dicke von 0,05 mm bis 2,5 mm aufweisend, bevorzugt von 0,12 mm bis 1,00 mm, besonders bevorzugt von 0,15 mm bis 0,37 mm, insbesondere bevorzugt von 0,18 mm bis 0,30 mm, jeweils zuzüglich Klebstoffbeschichtung.

Bevorzugt weist das nicht kornorientierte Elektroband oder das nicht kornorientierte Elektroblech spezifische Ummagnetisierungsverluste bei P1,0;400 Hz im Bereich von 10 bis 19 W/kg und/oder eine Polarisation bei J100 bei 50 Hz im Bereich von 0,6 T bis 1,3 T auf, bevorzugt 0,800 T bis 0,850 T, ermittelt in Anlehnung an DIN EN 60404-2:2009-01, in der Verfahren zu Bestimmung von Polarisation und Feldstärke beschrieben sind, die der Fachperson bekannt sind. Die Bestimmung dieser Werte erfolgt beispielsweise mittels eines Epsteinrahmens zur Bestimmung der Polarisation, insbesondere gemäß DIN EN 60404-2:2009-01: Magnetische Werkstoffe - Teil 2: Verfahren zur Bestimmung der magnetischen Eigenschaften von Elektroband und -blech mit Hilfe eines Epsteinrahmens.

Vorzugsweise weist das nicht kornorientierte Elektroband oder das nicht kornorientierte Blech eine Streckgrenze in Längsrichtung bei Standardnormalbedingungen von 190 bis 610 MPa und eine maximale Zugfestigkeit von 310 bis 740 MPa und eine Mindestbruchdehnung A80 von 6 bis 48 % gemessen in Anlehnung an DIN EN ISO 6892-1 sowie eine Härte Hv5 von 100-250 auf.

In einer besonders bevorzugten Ausführungsform weist der Werkstoff eine Streckgrenze in Längsrichtung bei Raumtemperatur von 310 bis 600 MPa und eine maximale Zugfestigkeit von 400 bis 640 MPa sowie eine Bruchdehnung A80 von 7 bis 32 % gemessen in Anlehnung an DIN EN ISO 6892-1 sowie eine Härte Hv5 von 130-250 auf.

Das Material weist bevorzugt eine Anisotropie bei P1,0; 400 Hz im Bereich von 5 bis 17 % auf.

Das Ausgangsmaterial kann aber auch ein anderer weichmagnetischer Werkstoff sein, beispielsweise neben Fe und unvermeidbaren Verunreinigungen bestehend aus (alle Angaben in Gew.-%) :
0,1 bis 4,0 Si,
0,01 bis 2,60 Al,
0,07 bis 3,0 Mn,
optional bis zu 0,5 P,
optional bis zu 0,015 B,
optional bis zu 0,2 Sb,
optional bis zu 0,01 Zn,
optional bis zu 5 Cr,
optional bis zu 5 Ni,
optional bis zu 0,25 V,
optional bis zu 0,5 Sn,
optional bis zu 0,01 As,
optional bis zu 0,3 Nb,
optional bis zu 0,5 W,
optional bis zu 0,85 Zr,
optional bis zu 0,2 Mo,
optional bis zu 1,0 Cu,
optional bis zu 0,5 Ti,
optional bis zu 0,5 C,
optional bis zu 0,01 Ce.

Ein weiterer Gedanke der Erfindung betrifft ein Blechpaket für eine elektrische Maschine. Das Blechpaket hat aufgrund neuartiger Fertigungsmethode, insbesondere mit erfindungsgemäßem Verfahren oder einer seiner Weiterbildungen, die bisher nicht bekannte Eigenschaft auf, dass es charakterisierbar ist durch einen Wert P1,0;400, der im Betrag maximal 10 %, bevorzugt maximal 2 %, von dem Wert P1,0;400 des noch nicht verklebten Blechlamellenstapels abweicht; und/oder einen Wert J100, der im Betrag maximal 10 %, bevorzugt maximal 3 %, von dem Wert J100 des noch nicht verklebten Blechlamellenstapels abweicht.

Mit anderen Worten ausgedrückt liegen erfindungsgemäß Blechpakete aus einer Anzahl von n miteinander in einem Blechlamellenstapel verklebten Blechlamellen vor, bei denen die oben genannten magnetischen Eigenschaften nicht oder innerhalb der genannten Grenzen von denjenigen magnetischen Eigenschaften eines Blechlamellenstapel aus n gestapelten, aber nicht verklebten, also lose aufeinander liegenden, Blechlamellen abweichen. "n" ist dabei eine positive ganze Zahl. Die Bereitstellung von einem verklebten Lamellenpaket, dessen magnetischen Eigenschaften identisch oder nur geringfügig von den lose aufeinander liegenden, noch nicht miteinander verklebten, Lamellen gleicher Art und Anzahl abweichen, kann beispielsweise mit einem oben beschriebenen erfindungsgemäßen Verfahren oder seinen Weiterbildungen erreicht werden. Die Anzahl der Lamellen in einem Blechlamellenstapel kann beispielsweise von 15 bis 2500 Lamellen, besonders von 20 bis 2000, betragen.

Ferner ist die Erfindung auf ein Blechpaket gerichtet, das mit einem erfindungsgemäßen Verfahren oder einer seiner Weiterbildungen herstellbar ist. Insbesondere sind Blechpakete umfasst, die die im Vorabschnitt beschriebene vorteilhafte Eigenschaft aufweist.

Es wurden Versuche durchgeführt, die nachfolgend beschrieben werden.

Es wurde eine Anzahl von Blechlamellen bereitgestellt.

Die Lamellen wurden aus einem Spaltband, Elektroband 027-150Y420 (NO27-15) nach DIN EN 10303 mit Dicke 0,27 mm und Breite 225 mm gestanzt.

Die Blechlamellen waren mit einer aushärtbaren Klebstoffbeschichtung auf Polymerbasis versehen.

Das Blech und dadurch auch die bereitgestellten Lamellen wurden mit einer Auftragswalze beidseitig mit Klebstoff beschichtet, der folgende Zusammensetzung aufwies:

| Gewichtsteile Epoxidharz (als Festharz vorliegend) | Gewichtsteile Härter | Gewichts- teile Beschleuniger | Ausgewählter Beschleuniger | |
|---|---|---|---|---|
| 60 | 3,5 | 3, 0 | 4,4'-Methylen-bis-(Phenyldimethylharnstoff) | |

Es wurde eine Gesamtschichtdicke des Klebstoffs von 6 µm aufgetragen, der wie folgt als asymmetrische Schichtdicken auf die zwei Oberflächen jeder Lamelle verteilt war:
1. Oberfläche: 4 µm, 2. Oberfläche 2 µm.

Es wurden Blechlamellenstapel hergestellt, und zwar aus 54 Lamellen. Mit der Lamellendicke von 0,27 mm pro Lamelle zuzüglich Klebstoffbeschichtung wurde eine Probendicke des Blechlamellenstapels von 14,6 mm erhalten. Die Stapelung erfolgte dabei derart, dass zwei benachbarte Lamellen jeweils eine 1. Oberfläche und eine 2. Oberfläche zueinander zugewandt stapelten, sodass zwischen den Lamellenoberflächen jeweils insgesamt eine 6 µm dicke Klebstoffstapelung vorlag.

Blechlamellenstapel des beschriebenen Aufbaus wurden jeweils einer Wärmebehandlung bei unterschiedlichen Temperaturen unterzogen, um in der Klebstoffbeschichtung eine Klebeneigung herbeizuführen und einen verklebten Blechlamellenstapel zu bilden.

Es wurden Versuche mit unterschiedlichen Prozesstemperaturen, nämlich 120 Grad Celsius, 140 Grad Celsius, 160 Grad Celsius und 180 Grad Celsius durchgeführt. Die Prozesstemperatur wurde mittels Mittelfrequenzinduktionsanlage herbeigeführt. Das Erwärmen des Blechlamellenstapels wurde in unterschiedlichen Heizraten ausgeführt, wobei in einem Zeitraum tHeiz die Temperatur linear zu der Aktivierungstemperatur tSoll geführt wurde. Um eine ausreichende Klebeneigung des Klebstoffs sicherzustellen, wurde die Prozesstemperatur für eine Haltezeit tHalte von 90 Sekunden beibehalten, und sodann die Energiezufuhr beendet, sodass die inzwischen verklebten Blechlamellenstapel abkühlen konnten. Um eine gute Anhaftung herbeizuführen, wurden die Proben mit einer Flächenpressung von 1,2 N/mm² in axialer Richtung der Lamellen beaufschlagt.

Es wurden ferner zwei Vergleichsproben mit nicht erfindungsgemäßer Verfahrensführung hergestellt. Probe V5 ist ein zu der vorstehend beschriebenen Stapelung analog aufgebauter Blechlamellenstapel, jedoch gefügt im der Fachperson bekannten Backlack-Verfahren, der für eine Zeitdauer von 2 Stunden bei einer Prozesstemperatur von 190 Grad Celsius im Ofen behandelt wurde. Als weitere Referenzprobe wurde ein analog aufgebauter Blechlamellenstapel, jedoch lediglich mit aufeinander angeordneten Blechlamellen ohne jegliche Verklebung, magnetisch vermessen. Diese Probe V28 diente als Vergleichsmaßstab, mit denen die gefügten Blechlamellenstapel verglichen werden konnten.

Die erhaltenen Proben wurden auf ihre magnetischen Eigenschaften hin untersucht.

Dies erfolgte unter Nutzung eines BST-M Statormessgeräts, das über einen Messstand MPG 200 der Firma Brockhaus gespeist und geregelt wird. Das BST-M verfügt über einen vorgefertigten Spulenschlauch mit fünf Primär- und fünf Sekundärwicklungen, womit in Anlehnung an DIN EN IEC 60404-6 VDE 0354-6:2020-01 die magnetischen Eigenschaften des Statorjochs ermittelt wurden.

Die hier präsentierten Messungen weichen in folgenden Aspekten von der genannten Norm ab, sind aber darüber hinaus gemäß den Angaben aus der Norm durchgeführt:

Der Prüfling ist kein Toroid, sondern ein Statorpaket, welcher neben dem Rückschlussjoch auch eine ausgeprägte Zahngeometrie aufweist. Da die Zahnköpfe jedoch nicht miteinander verbunden sind, ist kein definierter magnetischer Streuflusspfad vorhanden.

Aufgrund der Zahngeometrie ist insbesondere bei hohen magnetischen Aussteuerungen mit einer leichten Flussentspannung des Statorjochs in den Bereich der Zahnwurzel hinein zu erwarten.

Bezüglich der Wicklung kann aufgrund des Spulenschlauchs des Messgerätes die in der Norm geforderte probennahe Anbringung der Sekundärwicklung nicht erfüllt werden, ebenso wie die gleichmäßige Verteilung der Wicklung entlang des Probenkörpers.

Infolgedessen sind die Messungen nicht mit Normmessungen vergleichbar. Jedoch ist ein Vergleich innerhalb der Messreihe zulässig, da für jede Messung die gleichen Bedingungen vorherrschten.

Hierfür wurde der Prüfling auf dem BST-M positioniert und die Wicklung am Prüfling aufgebracht. Die präsentierten Messergebnisse sind mit einer Primär- und Sekundärwindungszahl von jeweils 15 Windungen ermittelt worden.

Vor jedem Messpunkt wurde der Prüfling einer Wechselfeldentmagnetisierung ausgesetzt, erst hiernach wurde der jeweilige Messpunkt angefahren. Für die jeweilige Frequenz (DC, 5Hz, 10Hz, 20Hz, 30Hz, 40Hz, 50Hz, 100Hz, 400Hz und 800Hz) wurde eine Vorgabe der Feldstärke H (z.B. 100A/m, 200A/m, 2500A/m, 5000A/m und 10.000A/m) bzw. der magnetischen Flussdichte B (von 0,1T bis 1,8T in 0,1T-Schritten) definiert und durch die Software des MPG200 angefahren.

Ein repräsentativer Teil der erhaltenen Ergebnisse ist in Tabelle 1 aufgeführt. Es sind die folgenden Ergebnisse zu erkennen:
1. Geringe Ummagnetisierungsverluste und hohe Polarisation erfordern gezielte Kombination von Tsoll und tHeiz.
2. Bei geeigneter Kombination aus Tsoll und tHeiz, wie in Proben 10/11 und 18/19, werden Lamellenpakete erhalten, deren magnetischen Eigenschaften mit einer relativen Abweichung von 0,33 % (als Durchschnitt aus den Messungen erhalten aus den gleichartigen Proben 10 und 11) und 1,16 % (als Durchschnitt aus den Messungen erhalten aus den gleichartigen Proben 18 und 19) nur geringfügig von einem nicht verklebten Stapel Lamellen abweichen, wie anhand Vergleichs mit der Referenzprobe V28 erkennbar.

| | | | | 50 Hz | 50 Hz | 50 Hz | 50 Hz | 400 Hz | Änderung der Verluste zu Einzellamellen |
|---|---|---|---|---|---|---|---|---|---|
| Probe | tHeiz | Tsoll | tHalte | 100 A/m | 200 A/m | 1 T | 1,5 T | 1 T | |
| | | | | J100 | J200 | P1,0/50 | P1,5/50 | P1,0/400 | P1,0/400 |
| | [s] | [°C] | [s] | [T] | [T] | [T] | [W/kg] | [W/kg] | |
| 1 | 600 | 120 | 90 | 0,733 | 1,034 | 1,06 | 1,92 | 15,15 | 6,4% |
| 2 | 600 | 120 | 90 | 0,744 | 1,046 | 1,05 | 1,90 | 15,17 | 6,5% |
| 3 | 600 | 140 | 90 | 0,736 | 1,039 | 1,05 | 1,91 | 15,24 | 7,0% |
| 4 | 600 | 140 | 90 | 0,736 | 1,039 | 1,05 | 1,90 | 15,06 | 5,8% |
| V5 | | 190 | 2std | 0,691 | 1,012 | 1,09 | 1,95 | 15,50 | 8,8% |
| 6 | 600 | 160 | 90 | 0,739 | 1,040 | 1,04 | 1,90 | 14,97 | 5,1% |
| 7 | 600 | 180 | 90 | 0,739 | 1,039 | 1,05 | 1,91 | 15,05 | 5,7% |
| 8 | 600 | 180 | 90 | 0,735 | 1,037 | 1,06 | 1,93 | 15,18 | 6,6% |
| 9 | 600 | 160 | 90 | 0,732 | 1,032 | 1,06 | 1,93 | 15,09 | 5,9% |
| **10** | **90** | **120** | **90** | **0,841** | **1,123** | **1,01** | **1,88** | **14,27** | **0,2%** |
| **11** | **90** | **120** | **90** | **0,842** | **1,123** | **1,01** | **1,89** | **14,31** | **0,5%** |
| 12 | 90 | 140 | 90 | 0,748 | 1,046 | 1,05 | 1,92 | 15,03 | 5,6% |
| 13 | 90 | 140 | 90 | 0,750 | 1,049 | 1,04 | 1,91 | 14,92 | 4,8% |
| 14 | 90 | 160 | 90 | 0,746 | 1,048 | 1,05 | 1,91 | 14,99 | 5,2% |
| 15 | 90 | 160 | 90 | 0,743 | 1,040 | 1,05 | 1,94 | 15,06 | 5,8% |
| 16 | 90 | 180 | 90 | 0,740 | 1,040 | 1,05 | 1,93 | 15,11 | 6,1% |
| 17 | 90 | 180 | 90 | 0,747 | 1,047 | 1,05 | 1,92 | 14,97 | 5,1% |
| **18** | **240** | **120** | **90** | **0,824** | **1,110** | **1,01** | **1,89** | **14,41** | **1,2%** |
| **19** | **240** | **120** | **90** | **0,834** | **1,118** | **1,01** | **1,89** | **14,40** | **1,1%** |
| 20 | 240 | 140 | 90 | 0,750 | 1,048 | 1,04 | 1,91 | 15,00 | 5,3% |
| 21 | 240 | 140 | 90 | 0,735 | 1,034 | 1,05 | 1,92 | 15,06 | 5,7% |
| 22 | 240 | 160 | 90 | 0,743 | 1,042 | 1,05 | 1,93 | 15,04 | 5,6% |
| 23 | 240 | 160 | 90 | 0,750 | 1,053 | 1,04 | 1,89 | 14,96 | 5,1% |
| 24 | 240 | 180 | 90 | 0,745 | 1,047 | 1,05 | 1,92 | 14,99 | 5,2% |
| 25 | 240 | 180 | 90 | 0,740 | 1,039 | 1,06 | 1,95 | 15,13 | 6,3% |
| 26 | 240 | 160 | Puls | 0,736 | 1,037 | 1,05 | 1,92 | 15,07 | 5,8% |
| 27 | 240 | 160 | Puls | 0,744 | 1,042 | 1,05 | 1,92 | 15,07 | 5,8% |
| 11b nacherwärmt | - | 190 | 7200 | 0,832 | 1,114 | 1,02 | 1,92 | 14,45 | 1,5% |
| V28 | | | | 0,820 | 1,113 | 1,02 | 1,91 | 14,24 | - |

Es konnte also nachgewiesen werden, dass durch geeignete Parameterwahl Lamellen zu Blechpaketen gefügt werden können, die hervorragende magnetische Eigenschaften mit nur geringer Abweichung von den nicht verklebten Blechpaketen aufwiesen, Die erhaltenen Parameter umfassten dabei vergleichsweise kurze Zeiträume für das Erwärmen, sodass ein großer Effizienzgewinn gegenüber anderen Verfahren verzeichnet werden kann, da bei letzterer häufig eine lange, teils mehrstündige Ofenbehandlung von Blechpaketen erforderlich ist. Es wurde also gefunden, dass auf eine lange Erwärmung in einem Ofen, wie beispielsweise bei der Verklebung von Backlack, verzichtet werden kann, ohne wichtige Eigenschaften der Blechpakete in nicht akzeptablem Maß zu verschlechtern.

Zur Vervollständigung der Ergebnisse und zur Einordnung der Beständigkeit der vorteilhaften magnetischen Eigenschaften wurde Probe 11 einem Nachwärmen unterzogen, und zwar für einen Zeitraum von 2 Stunden bei einer Temperatur von 190 Grad Celsius im Ofen und ohne axiale Druckbeaufschlagung. Die erhaltenen Ergebnisse sind in Tabelle 1 als Probe 11b wiedergegeben Das Nachwärmen kann optional durchgeführt werden, unter anderem um ein vollständiges oder nahezu vollständiges Aushärten der Polymerschicht zu erreichen, was der mechanischen Stabilität des Blechpakets zugutekommt. Die Ergebnisse der Tabelle 1 zeigen, dass mit Abweichungen der nachgewärmten Probe von 1,5 % bei 400Hz und 1 T gegenüber den Einzellamellen ein optionales Nachwärmen nicht zu einer maßgeblichen Beeinträchtigung des Verhaltens im magnetischen Feld führt, was als Vorteil des Fügens der Blechlamellen mit den beschriebenen Verfahrensführungen anzusehen ist. Insbesondere der Vergleich der Probe 11b mit der Probe V5 zeigt, dass die Verfahrensführung bei Herstellung der Probe 11b, die eine weitergebildete erfindungsgemäße Verfahrensführung ist, infolge der Wärmebehandlung des Schritts C) deutlich bessere magnetische Eigenschaften aufweist, als es bei der Probe V5 der Fall ist, die konventionell hergestellt wurde, und bei der eine Wärmebehandlung gemäß Schritt C) nicht durchgeführt wurde.

## Patentansprüche

1. Verfahren zum Herstellen eines Blechpakets für eine elektrische Maschine, wobei das Blechpaket bevorzugt entweder ein Stator-Paket oder ein Rotor-Paket ist, aufweisend die folgenden Schritte:
A) Bereitstellen einer Anzahl von Blechlamellen, wobei die Blechlamellen mit einer zumindest teilweise aushärtbaren Klebstoffbeschichtung auf Polymerbasis versehen sind, wobei die Klebstoffbeschichtung eine Aktivierungstemperatur aufweist,
B) Stapeln der Blechlamellen zu einem Blechlamellenstapel,
C) Wärmebehandlung des Blechlamellenstapels zum Herbeiführen einer Klebeneignung der Klebstoffbeschichtung zum Verkleben der Blechlamellen des Blechlamellenstapels,
**dadurch gekennzeichnet, dass**
die Wärmebehandlung
ein Erwärmen des Blechlamellenstapels hin zu einer Prozesstemperatur umfasst, die einen Wert von 80 Grad Celsius oder mehr und von 250 Grad Celsius oder weniger beträgt, wobei die Prozesstemperatur geringer ist als die Aktivierungstemperatur.

2. Verfahren nach Anspruch 1, wobei, ausgehend von Raumtemperatur, das Erwärmen des Blechlamellenstapels hin zu der Prozesstemperatur während eines Zeitraums durchgeführt wird, der maximal 500 Sekunden beträgt, bevorzugt maximal 300 Sekunden beträgt, dabei insbesondere bevorzugt mit konstanter Heizrate.

3. Verfahren nach Anspruch 1 oder nach Anspruch 2, wobei die Wärmebehandlung ein Halten des Blechlamellenstapels bei der Prozesstemperatur umfasst,
oder ein Halten des Blechlamellenstapels in einem Prozesstemperaturbereich umfasst, wobei der Prozesstemperaturbereich ein Bereich von plus/minus 10 Grad Celsius, bevorzugt plus/minus 5 Grad Celsius, oberhalb beziehungsweise unterhalb der Prozesstemperatur ist.

4. Verfahren nach Anspruch 3,
wobei das Halten für wenigstens 1 Sekunde, bevorzugt wenigstens 30 Sekunden, besonders bevorzugt wenigstens 45 Sekunden, insbesondere bevorzugt wenigstens 60 Sekunden durchgeführt wird,
wobei das Halten für maximal 40 Minuten, bevorzugt maximal 20 Minuten, besonders bevorzugt maximal 10 Minuten, insbesondere bevorzugt maximal 5 Minuten durchgeführt wird.

5. Verfahren nach Anspruch 3 oder nach Anspruch 4, wobei das Halten für einen Zeitraum von wenigstens 70 Sekunden und maximal 150 Sekunden durchgeführt wird.

6. Verfahren nach einem der vorhergehenden Ansprüche, wobei die Prozesstemperatur einen Wert
von 100 Grad Celsius oder mehr beträgt, bevorzugt 110 Grad Celsius oder mehr.

7. Verfahren nach einem der vorhergehenden Ansprüche, wobei die Prozessstemperatur einen Wert
von 150 Grad Celsius oder weniger beträgt oder
von 140 Grad Celsius oder weniger beträgt oder
von 130 Grad Celsius oder weniger beträgt oder
von 125 Grad Celsius oder weniger beträgt oder
von 120 Grad Celsius oder weniger beträgt.

8. Verfahren nach einem der vorhergehenden Ansprüche, wobei die Prozesstemperatur einen Wert von wenigstens 100 Grad Celsius und maximal 130 Grad Celsius beträgt.

9. Verfahren nach einem der vorhergehenden Ansprüche, wobei die Lamellen während der Wärmebehandlung zeitweise oder durchgehend mit einer in axialer Richtung weisenden Druckkraft beaufschlagt werden, bevorzugt mit einer Druckkraft von 0,25 N/mm² oder mehr und/oder von bis zu 10 N/mm², bevorzugt von 1 N/mm² oder mehr und 8 N/mm² oder weniger, besonders bevorzugt von 1 N/mm² oder mehr und 5 N/mm² oder weniger.

10. Verfahren nach einem der vorhergehenden Ansprüche, wobei das Erwärmen mit einem Ofen oder Induktionsheizer und/oder in einem Induktionsofen durchgeführt wird.

11. Verfahren nach einem der vorhergehenden Ansprüche, wobei nach der Wärmebehandlung ein Nachwärmen durchgeführt wird, bevorzugt für einen Zeitraum von 60 Sekunden oder mehr und 3 Stunden oder weniger, zum vollständigen Aushärten der Klebstoffbeschichtung.

12. Verfahren nach Anspruch 11, wobei das Nachwärmen bei einer Temperatur im Bereich von 160 Grad Celsius bis zu 200 Grad Celsius durchgeführt wird, bevorzugt bei einer Temperatur im Bereich von 170 Grad Celsius bis zu 195 Grad Celsius, besonders bevorzugt bei einer Temperatur im Bereich von 180 Grad Celsius bis zu 195 Grad Celsius, und/oder
wobei das Nachwärmen entweder in einem Ofen durchgeführt wird während einer Zeitdauer von 30 Minuten oder mehr und 3 Stunden oder weniger, oder das Nachwärmen mittels Induktionserwärmens durchgeführt wird während einer Zeitdauer von 30 Sekunden oder mehr und 10 Minuten oder weniger.

13. Verfahren nach einem der vorhergehenden Ansprüche, wobei die Klebstoffbeschichtung enthält:
60 Gewichtsteile mindestens eines Epoxidharzes in Festharzform;
0,5 bis 15 Gewichtsteile eines latenten Härters, bevorzugt 1 bis 10 Gewichtsteile eines latenten Härters, besonders bevorzugt 2 bis 5 Gewichtsteile eines latenten Härters;
1 bis 15 Gewichtsteile eines latenten Beschleunigers, wobei bevorzugt der latente Beschleuniger ein Harnstoffderivat enthält oder ist, besonders bevorzugt das Harnstoffderivat ein N,N-Dimethylharnstoff oder ein N,N'-Dimethylharnstoff oder ein 4,4'-Methylen-bis-(Phenyldimethylharnstoff) ist.

14. Verfahren nach einem der vorhergehenden Ansprüche, wobei die Blechlamellen bestehen aus
Elektroblech, insbesondere nicht kornorientiertem Elektroblech,
bevorzugt neben Fe und unvermeidbaren Verunreinigungen umfassend (alle Angaben in Gew.-%):
0,1 bis 4,00 Si,
0,01 bis 2,00 Al,
0,01 bis 1,60 Mn,
optional 0,01 bis zu 0,25 P,
optional 0,01 bis 1,80 Cr;
besonders bevorzugt, neben Fe und unvermeidbaren Verunreinigungen, bestehend aus, mit allen Angaben in Gew.-%:
2,3 bis 3,50 Si,
0,3 bis 1,60 Al,
0,07 bis 0,65 Mn,
optional 0,01 bis zu 0,07 P,
optional 0,01 bis 1,60 Cr;
jede Lamelle bevorzugt eine Dicke von 0,05 mm bis 2,5 mm aufweisend, besonders bevorzugt von 0,12 mm bis 1,00 mm, insbesondere besonders bevorzugt von 0,15 mm bis 0,37 mm, noch mehr insbesondere bevorzugt von 0,18 mm bis 0,30 mm, jeweils zuzüglich Klebstoffbeschichtung.

15. Blechpaket für eine elektrische Maschine, aufweisend
einen Wert P1,0;400 Hz, der maximal 10 %, bevorzugt maximal 2 %, von dem Wert P1,0;400 Hz des noch nicht verklebten Blechlamellenstapels abweicht; und/oder
einen Wert J100, der maximal 10 %, bevorzugt maximal 3 %, von dem Wert J100 des noch nicht verklebten Blechlamellenstapels abweicht.

16. Blechpaket, insbesondere Blechpaket nach Anspruch 15, erhältlich mit einem Verfahren nach einem der Ansprüche 1 bis 14.
